# EUROPEAN PATENT SPECIFICATION

(11) **EP 2 662 233 B1**
(45) Date of publication and mention of the grant of the patent: **01.12.2021**
(21) Application number: 13002088.6
(22) Date of filing: 22.04.2013
(51) Int. Cl.: B60N 2/26

(54) **Flip forward buckle assembly**
Vorklapp-Schnallenanordnung
Ensemble de boucle avant rabattable

(30) Priority: 09.05.2012 US 201213467710; 17.10.2012 US 201261715014 P
(43) Date of publication of application: 13.11.2013
(73) Proprietor: Britax Child Safety Inc., Charlotte, NC 28273 (US)
(72) Inventor: Franck, Christopher G., Fort Mill, 29707 (US); Gunter, Mark, York, 29745 (US); Strong, Lynn Curtis, Rock Hill, 29730 (US); Lumley, Michael, Grovedale Victoria, 3216 (AU)
(74) Representative: Bosch Jehle Patentanwaltsgesellschaft mbH

(56) References cited:
- WO-A2-2007/103641
- US-A1- 2011 006 572

## Description

### TECHNICAL FIELD

The present invention generally relates to the field of child safety seats, and more particularly, to a child safety seat including a harness assembly configured to restrain an infant and/or child in the child safety seat and to a method of securing a child to the child safety seat.

### BACKGROUND

Child safety seating products are designed to protect children in vehicles from the effects of impacts or other sudden changes in motions. Child safety seats, commonly referred to simply as car seats, may be used in a variety of vehicles with a variety of seating configurations. It is important for a child safety seat to securely retain an occupant and limit movement of that occupant, particularly during an impact. Typically, a child safety seat will include a harness assembly configured to secure the child to the child safety seat when a child occupies the child safety seat.

Some harness assemblies of child safety seats include a plurality of shoulder straps that are configured to engage a buckle assembly that is attached to a seat portion of the child safety seat and extends between the child's legs. Some harness assemblies and/or buckle assemblies are difficult to position to allow for a child to initially occupy the seat. Often, the harness assembly and/or buckle assembly must be manually arranged by a user to facilitate the initial placement of a child in the child safety seat. In addition, children and infants are often unwilling to be placed in a child safety seat, making the manipulation of the harness assembly and the placement of the child into the seat even more difficult. Accordingly, it would be desirable to produce a buckle assembly that provides for easier insertion and/or removal of a child from a child safety seat.

The document US2011/006572 discloses a belt assembly for a child car seat.

### BRIEF SUMMARY

Various embodiments of the present invention are directed to child safety seats that may reduce the likelihood of injury to an occupant of the seat resulting from an impact. In particular, embodiments of the present invention are directed to a harness assembly configured to restrain a child occupying the child safety seat.

According to the invention, a harness assembly is provided that is configurable between an engaged state and a disengaged state for a child safety seat. The harness assembly comprises a plurality of shoulder straps, each shoulder strap including a buckle tab, and at least one buckle assembly. The buckle assembly comprises a buckle configured to receive the buckle tabs for securing the shoulder straps in the engaged state, a buckle pad, where at least a portion of the buckle pad is generally aligned with and adjacent to the buckle, a buckle webbing extending from the buckle and configured to attach the buckle to the child safety seat, and a biasing member engaged with the buckle pad. The biasing member is configured to bias the buckle assembly toward a first position away from an occupant of the child safety seat in the disengaged state, wherein the biasing member comprises a closed loop of material.

The closed loop of material may comprise a metal material and/or a braided material. In some embodiments, the biasing member may comprise a longitudinal strip of material and may comprise a metal material, a plastic material, and/or an elastic material. The buckle pad may include a buckle pad tail portion configured to receive at least a portion of the biasing member and a buckle pad head portion generally aligned with the buckle. The buckle pad may be disposed between an occupant and the buckle, and the buckle pad may be configured to provide the occupant with cushioning from the buckle. In some cases, the buckle pad may further comprise a biasing member pocket that is configured to receive the biasing member therein. The biasing member pocket may extend from one end located in the buckle pad tail portion to another end located in the buckle pad head portion. Additionally or alternatively, the buckle pad may include a buckle strap configured to receive the buckle webbing therethrough such that when a biasing force is applied to the buckle pad by the biasing member, the biasing force is also applied to the buckle webbing. The buckle webbing may be configured to secure the buckle assembly to the child safety seat.

The buckle pad may include a buckle webbing opening that completely extends from a first surface of the buckle pad to an opposite surface of the buckle pad. The buckle webbing opening may be configured to receive the buckle webbing therethrough such that a portion of the buckle webbing may be disposed in front of the buckle pad and a portion of the buckle webbing may be disposed behind the buckle pad.

The child safety seat may comprises a back portion and a seat portion, and the biasing member may be configured to move the buckle assembly to a position adjacent the seat portion and away from the back portion in the first position. The first position may be located forward of a second position, and the second position may be defined by the position of the buckle when the harness assembly is in the engaged state.

A child safety seat is provided that is configurable to be attached to a vehicle seat. The child safety seat may comprise a seat portion configured to receive a child thereon, a back portion extending upwardly from an edge of the seat portion, a seat cover configured to cover the seat portion and the back portion, and a harness assembly configurable between an engaged state and a disengaged state. The harness assembly may include a plurality of shoulder straps, each shoulder strap including a buckle tab, and at least one buckle assembly. The buckle assembly may comprise a buckle configured to receive the buckle tabs for securing the shoulder straps in the engaged state, a buckle pad, at least a portion of which is generally aligned with and adjacent to the buckle, a buckle webbing extending from the buckle and configured to attach the buckle to the child safety seat, and a biasing member engaged with the buckle pad. The biasing member may be configured to bias the buckle assembly toward a first position away from the back portion of the child safety seat in the disengaged state.

The biasing member comprises a closed loop of material. In some cases, the biasing member may comprise a braided metal material. In some embodiments, the biasing member may comprise a longitudinal strip of material and may comprise a metal material, a plastic material, and/or an elastic material. The buckle pad may include a buckle pad tail portion configured to receive at least a portion of the biasing member and a buckle pad head portion generally aligned with the buckle. At least a portion of the buckle pad tail portion may be disposed between the seat portion and the seat cover. Furthermore, at least a portion of the buckle pad may be disposed between an occupant and the buckle. The buckle pad may be configured to provide the occupant with cushioning for the buckle in the engaged state. The buckle pad may further comprise a biasing member pocket configured to receive the biasing member therein, and the biasing member pocket may extend from one end located in the buckle pad tail portion to another end located in the buckle pad head portion. The buckle pad may include a buckle strap configured to receive the buckle webbing therethrough such that when a biasing force is applied to the buckle pad by the biasing member, the biasing force is also applied to the buckle webbing.

The buckle pad may include a buckle webbing opening that completely extends from a first surface of the buckle pad to an opposite surface of the buckle pad. The buckle webbing opening may be configured to receive the buckle webbing therethrough such that a portion of the buckle webbing may be disposed in front of the buckle pad

In some cases, the child safety seat may further comprise a buckle anchor that is coupled to an end of the buckle webbing opposite of the buckle. The buckle anchor may be configured to attach the buckle assembly to the seat portion. The biasing member may be configured to move the buckle assembly to a position adjacent the seat portion and away from the back portion in the first position. The first position may be located forward of a second position, and the second position may be defined by the position of the buckle when the harness assembly is in the engaged state.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1A illustrates a child safety seat according to one embodiment of the present invention;
FIG. 1B illustrates a child safety seat according to one embodiment of the present invention;
FIG. 2A illustrates a front view of a buckle pad according to one embodiment of the present invention;
FIG. 2B illustrates a rear view of a buckle pad according to one embodiment of the present invention;
FIG. 2C illustrates a side view of a buckle assembly and seat portion according to one embodiment of the present invention;
FIG. 3 illustrates a biasing member of a buckle assembly according to one embodiment of the present invention;
FIG. 4 illustrates a cross-sectional view of the biasing member of the buckle assembly according to one embodiment of the present invention;
FIG. 5A illustrates a front view of a buckle pad including a buckle webbing opening according to one embodiment of the present invention;
FIG. 5B illustrates a rear view of the buckle pad of FIG. 5A according to one embodiment of the present invention;
FIG. 5C illustrates a side view of a buckle assembly including a buckle pad with a buckle webbing opening according to one embodiment of the present invention;
FIG. 6 illustrates a front view of a buckle pad according to one embodiment of the present invention;
FIG. 7 illustrates a front view of a buckle pad according to another embodiment of the present invention; and
FIG. 8 illustrates a portion of a child safety seat according to one embodiment of the present invention.

### DETAILED DESCRIPTION OF THE INVENTION

The present invention will now be described more fully hereinafter with reference to the accompanying drawings, in which some, but not all embodiments of the inventions are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout. The terms top, bottom, side, up, down, upwards, downwards, vertical, horizontal, and the like as used herein do not imply a required limitation in all embodiments of the present invention, but rather are used herein to help describe relative direction or orientation in the example embodiments illustrated in the figures.

A child safety seat may be configured for installation in a forward-facing position or in a reward-facing position to accommodate children in the appropriate position based on the height and weight of a child, such as according to the guidelines and standards of the United States National Highway Transportation Safety Administration (NHTSA) and similar authorities in other countries.

In addition, child safety seats are usually securely attached to a fixed location within the vehicle, such as in accordance with the international standard for attachment points for child safety seats, ISOFIX, or using LATCH (Lower Anchors and Tethers for Children) attachments in the U.S. Proper installation and use of a child safety seat within a vehicle is necessary to achieve the maximum protection afforded by the seat. Accordingly, when a child is placed within the child safety seat, the child safety seat harness is typically secured via a buckle to keep the child in the child safety seat while the vehicle is in motion.

Some child safety seats may include a seat portion and a back portion. In addition, some child safety seats are positioned such that an edge of the seat portion of the child safety seat, which in some instances may include a buckle attached thereto, is angled upwards from a horizontal plane with respect to the opposite edge of the seat portion adjacent the back portion. Accordingly, when the buckle is not engaged with the harness, the buckle may be naturally biased (e.g., by gravity) inwardly towards the back portion of a child safety seat. As such, when placing a child in the child safety seat for use, the child may experience temporary discomfort when placed on top of the buckle. Moreover, a user may find it difficult to locate and/or access the buckle when the child is sitting on the buckle, and the user may need to remove the child from the child safety seat to locate the buckle or at least shift the child in the seat, which may be difficult and/or time consuming.

Various embodiments of the present invention provide a child safety seat configured for attachment to a seat in a variety of vehicles. Additionally, some embodiments provide a child safety seat including a harness assembly that is configurable between an engaged state and a disengaged state. In the engaged state, a child occupying the child safety seat will be restrained in a secured fashion to the child safety seat, as described in greater detail below.

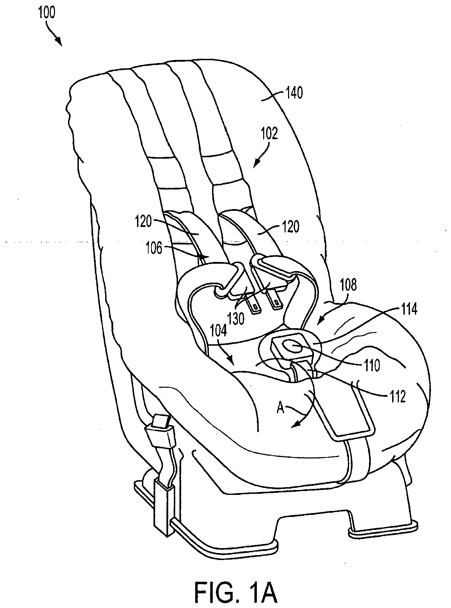

According to some embodiments, the child safety seat 100 may include a back portion 102 and a seat portion 104, as illustrated in FIG. 1A. According to some embodiments, the seat portion 104 may be configured to receive a child thereon. The seat portion 104 may include an edge (not visible) disposed adjacent and/or coupled to an edge of the back portion 102. In some embodiments, the back portion 102 may extend upwardly from the seat portion 104. For example, the back portion 102 may extend upwardly from the seat portion 104 in a substantially perpendicular manner with respect to a horizontal plane. According to some embodiments, the child safety seat 100 may include a seat cover 140 configured to cover the seat portion 104 and back portion 102 of the child safety seat. As such, a child may be placed in the child safety seat 100 such that the seat cover may be disposed between the child and the child safety seat 100. In particular, the child may be placed in the child safety seat 100 such that the child's upper body (e.g., the child's head, neck, and/or back) rests against the back portion 102 and the child's lower body (e.g., the child's posterior and legs) rests against the seat portion 104. Additionally, the seat cover 140 may provide a cushioned support for the child's upper body and the child's lower body as the child rests against the back portion 102 and the seat portion 104, respectively.

Additionally, the child safety seat 100 may include a harness assembly 106. In some embodiments, the harness assembly 106 may include shoulder straps 120. Additionally, the harness assembly 106 may include buckle tabs 130 configured to engage a buckle 110 so as to secure the shoulder straps 120 to the buckle 110 in an engaged state.

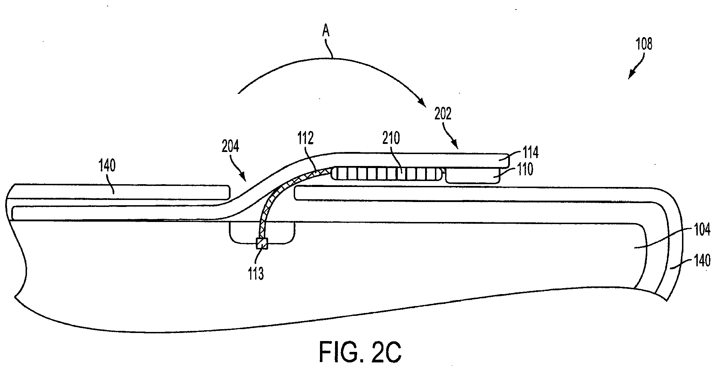

In some embodiments, the harness assembly 106 may further include at least one buckle assembly 108 comprising a buckle 110 configured to receive the buckle tabs 130 for securing the shoulder straps 120 in the engaged state. The buckle assembly 108 may further include a buckle pad 114, wherein at least a portion of the buckle pad 114 is generally aligned with and adjacent to the buckle 110 and/or buckle webbing 112, as shown in FIGS. 1A and 2C. For example, the buckle pad 114 may be adjacent to the buckle 110 such that the buckle pad 114 and the buckle 110 contact one another when the harness assembly is in the engaged state and a child occupies the child safety seat 100. In some embodiments, a buckle pad 114 may be configured to provide cushioning between the buckle 110 and a child occupying the child safety seat. For example, the buckle pad 114 may include cushioning material (e.g., foam, wadding, fabric, etc.) such that when the buckle assembly 108 and the harness assembly 106 are in the engaged state, a child occupying the seat experiences minimal discomfort from the buckle 110.

According to some embodiments, the buckle assembly 108 may include a buckle webbing 112 extending from the buckle 110 and configured to attach the buckle 110 to the child safety seat 100. For example, the buckle webbing 112 may be secured to the seat portion 104 of the child safety seat 100 via a buckle anchor 113 (shown in FIG. 2C). As such, the buckle webbing 112 may be configured to attach a buckle 110 to the child safety seat and may be configured to extend between a child's legs when the child occupies the child safety seat. In the depicted embodiment, the buckle webbing 112 comprises a single length of material that is anchored in one location (e.g., via the buckle anchor 113) to the seat portion 104. In other embodiments, however, the buckle webbing may comprise a plurality of straps, such as two straps that are connected to the buckle 110 and are anchored to the seat portion 104 of the child safety seat at two or more locations (e.g., via two or more anchors).

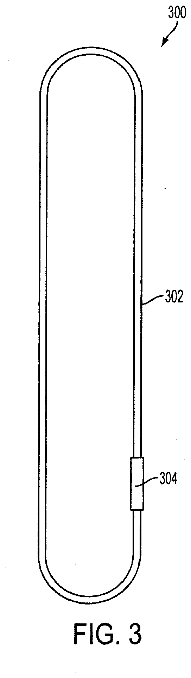

In some embodiments, the buckle assembly 108 may include a biasing member 300, shown in FIG. 3, engaged with the buckle pad 114 and configured to bias the buckle assembly 108, in an instance in which the harness assembly 106 is in the disengaged state, toward a first position located away from the back portion 102 of the child safety seat 100. For example, when the harness assembly 106 is in the disengaged state and a child is occupying the child safety seat, the buckle assembly 108 may be biased away from the child towards a location between the child's legs and proximate to the seat portion 104.

For example, the biasing member 300 may be configured to bias the buckle assembly 108 forwardly along the direction of curved arrow A, as shown in FIG. 2C, when the buckle assembly 108 is disengaged from the shoulder straps 120. In some embodiments, when the buckle assembly 108 is secured to the buckle tabs 130 of the shoulder straps 120 in the engaged state, the coupling of the shoulder straps 120 to the buckle assembly 108 overcomes a forwardly biasing force configured to bias the buckle assembly 108 to the first position along the direction A. Accordingly, in FIG. 1A, the buckle assembly 108 is depicted in an instance in which the biasing force is overcome (e.g., by a user attempting to engage the buckle 110 with the buckle tabs 130). Although FIG. 1A illustrates a buckle assembly that is used with a child safety seat, one skilled in the art may appreciate that the buckle assembly may be used with any seat (such as a high chair, stroller, etc.) so as to bias a buckle away from a back portion of the seat and/or clear the way for an occupant to be placed into the seat as described herein to facilitate use of the buckle and/or entry and removal of an occupant to the seat.

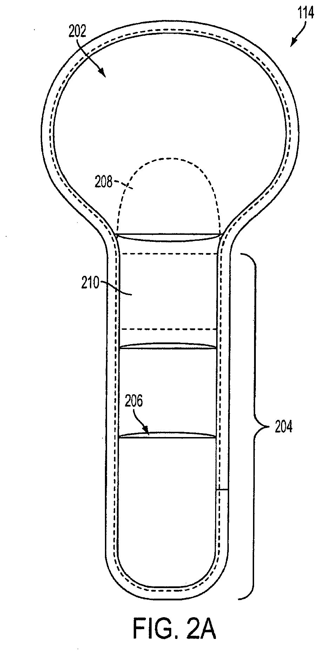

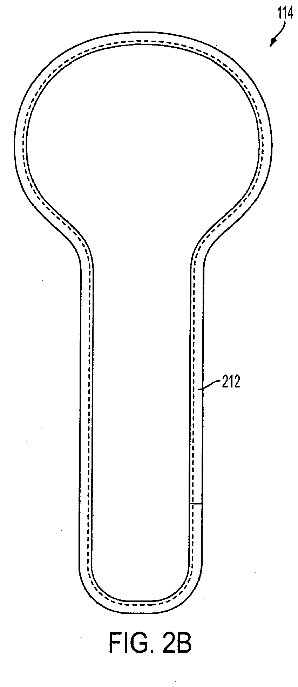

FIGS. 2A and 2B illustrate a buckle pad 114 according to an example embodiment of the present invention. Specifically, FIG. 2A illustrates a front view of the buckle pad 114, while FIG. 2B illustrates a rear view of the buckle pad 114. In some embodiments, the buckle pad 114 may have a lollipop shape as shown in FIGS. 2A and 2B. For example, the buckle pad 114 may include a buckle pad head portion 202 and a buckle pad tail portion 204. Although shown in FIGS. 2A and 2B as having a lollipop shape, one skilled in the art may appreciate that the buckle pad 114 may have any shape and/or size. For example, the buckle pad head portion 202 may have a greater width than the buckle pad tail portion 204 (as shown) or the same width. Similarly, the buckle pad tail portion 204 may have a greater length than the buckle pad head portion 202 (as depicted) or the same length as the buckle pad head portion 202 in some embodiments. FIGS. 2A and 2B illustrate the buckle pad head portion 202 having a substantially circular shape. In other embodiments, however, the head portion 202 may be substantially shaped as a rectangle, oval, and/or any other shape.

According to some embodiments, the head portion 202 and the tail portion 204 may be shaped such that a longitudinal length of the tail portion 204 and/or head portion 202 is generally aligned with the buckle 110 and/or buckle webbing 112. For example, the buckle pad 114 may include a head portion 202 generally aligned with the buckle 110, wherein the buckle pad 114 is disposed between a child occupying the child safety seat and the buckle 110. The buckle pad head portion 202 may be configured to provide a child occupying the child safety seat 100 with cushioning from the buckle 110. For example, the head portion 202 may be disposed between the buckle 110 and the child while the harness assembly is in the engaged state such that a cushioning material disposed within the head portion 202 cushions the child from the buckle 110. Similarly, the tail portion 204 may be generally aligned with the buckle webbing 112, such that the tail portion is disposed between the child occupying the child safety seat and the buckle webbing. The buckle tail portion 204 may be configured to provide the seated child with cushioning from the buckle webbing 112 while the harness assembly is in the engaged state.

According to some embodiments, the buckle pad 114 may include a tail portion 204 configured to receive at least a portion of a biasing member 300 therein. The buckle pad 114 may, for example, include a biasing member pocket 208 that is disposed within the interior of buckle pad 114. In some embodiments, the biasing member pocket 208, depicted via dashed lines in FIG. 2A, may be accessible from the front of the buckle pad 114 via a biasing member pocket opening 206. As shown in FIG. 2A, the biasing member pocket 208 may extend from the bottom of the buckle pad tail portion 204 to the buckle pad head portion 202. In some embodiments, the biasing member pocket 208 may extend to the top of the buckle pad head portion 202. In other embodiments, the biasing member pocket 208 may extend to approximately one-half of the length of the buckle pad head portion 202, whereas in still other embodiments, the biasing member pocket 208 may extend to less than one-half of the length of the buckle pad head portion 202 (as depicted) or may be housed entirely within the buckle pad tail portion 204.

According to some embodiments, the buckle pad 114 may further include a buckle strap 210. As shown in FIG. 2A, the buckle strap 210 may be coupled to the exterior surface of the buckle pad 114. In one embodiment, the buckle strap 210 may be coupled to the exterior surface of the buckle pad 114 such that the buckle strap 210 and the exterior surface of the buckle pad 114 form a passageway therebetween. In particular, the passageway between the buckle strap 210 and the buckle pad 114 may be configured to allow a buckle webbing 112, shown in FIG. 1A, to travel therethrough. Accordingly, the buckle strap 210 may be configured to receive the buckle webbing 112 therethrough such that when a biasing force is applied to the buckle pad 114 by the biasing member 300, the biasing force may also be applied to the buckle webbing 112 and/or the buckle 110 (e.g., the buckle assembly 108 as a whole). According to some embodiments, the biasing member 300 may be configured to move the buckle assembly 108 to the first position (shown in Fig. 2C), wherein the first position is adjacent the seat portion 104 and away from the back portion 102. For example, the biasing member 300 may be configured to apply a biasing force so as to move the buckle assembly to a first position adjacent the seat portion 104 and away from the back portion 102 when the harness assembly 106 is in the disengaged state. In some embodiments, the first position may be located forward of a second position (shown in FIG. 1A), wherein the second position is defined by the position of the buckle when the harness is in the engaged state (e.g., when the shoulder straps 120 are engaged with the buckle assembly 108). Additionally and/or alternatively, the second position may be defined as a position adjacent to the position of a child occupying the seat, such as when the harness assembly 106 is in the engaged state.

In some embodiments of the present invention, the buckle pad 114 may include an edging 212 that surrounds the perimeter of the buckle pad 114, as shown in FIG. 2B. The buckle strap 210 may be coupled to the buckle pad 114 by placing a portion of the buckle strap 210 underneath the edging 212 and by securing the edging 212 to the perimeter of the buckle pad 114 with a stitching, adhesive, and/or the like. In embodiments without an edging 212, the buckle strap 210 may be coupled to the buckle pad 114 by securing the buckle strap 210 directly to the material forming the buckle pad 114 with a stitching, adhesive, and/or the like. In still other embodiments, the buckle strap 210 may be integral to the buckle pad 114. For example, the buckle pad 114 may include a fabric covering that is slitted such that the slitted portion of the buckle pad covering forms the buckle strap 210.

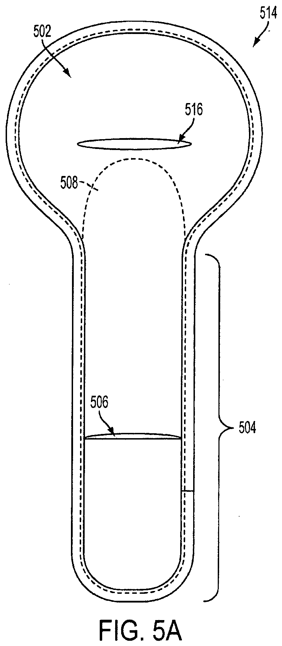

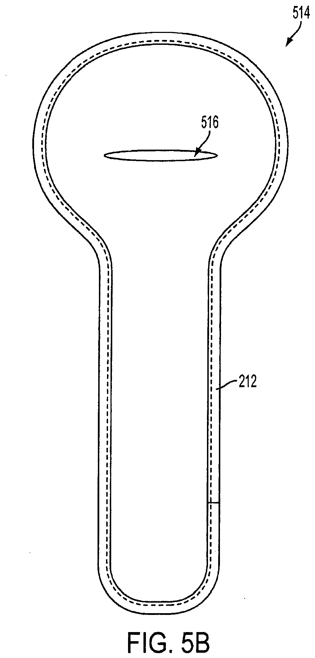

FIGS. 5A and 5B illustrate a buckle pad 514 according to another example embodiment of the present invention. FIG. 5A illustrates a front view of the buckle pad 514, while FIG. 5B illustrates a rear view of the buckle pad 514. The buckle pad 514 may include a buckle pad head portion 502 and a buckle pad tail portion 504. Although shown in FIGS. 5A and 5B as having a lollipop shape, one skilled in the art may appreciate that the buckle pad 514 may have any shape and/or size. For example, the buckle pad head portion 502 may have a greater width than the buckle pad tail portion 504 (as shown) or the same width. Similarly, the buckle pad tail portion 504 may have a greater length than the buckle pad head portion 502 (as depicted) or the same length as the buckle pad head portion 502 in some embodiments. FIGS. 5A and 5B illustrate the buckle pad head portion 502 having a substantially circular shape. In other embodiments, however, the head portion 502 may be substantially shaped as a rectangle, oval, and/or any other shape.

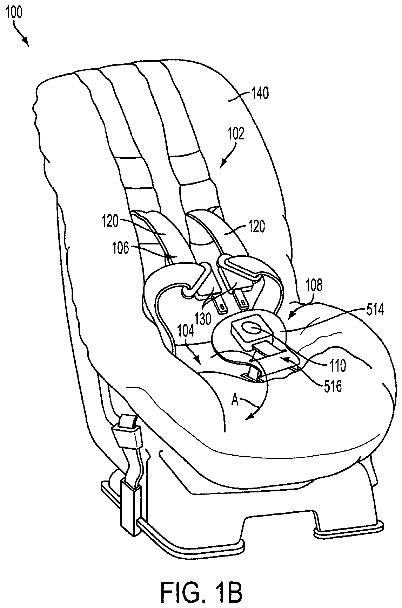

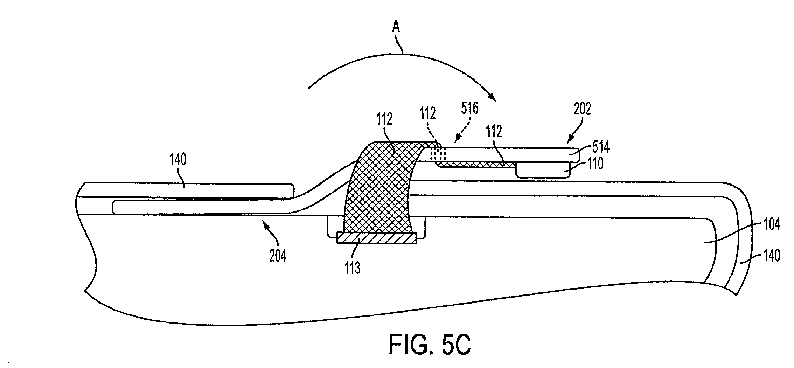

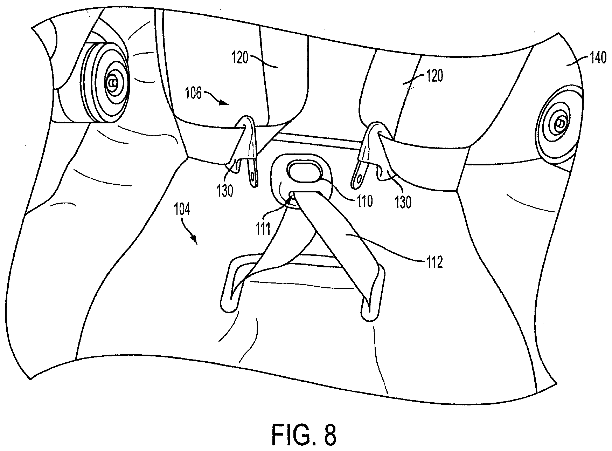

In some embodiments, the buckle pad head portion 502 and the buckle pad tail portion 504 may be shaped such that a longitudinal length of the buckle pad tail portion 504 and/or the buckle pad head portion 502 is generally aligned with a buckle 110 and/or buckle webbing 112. According to some embodiments of the present invention, the buckle pad head portion 502 may further include a buckle webbing opening 516 that extends completely through the buckle pad 514. The buckle webbing opening 516 may be configured to receive a buckle webbing 112 therethrough, as shown in FIGS. 1B and 5C. Thus, a portion of the buckle webbing 112 may be disposed in front of the buckle pad 514 and a portion of the buckle webbing 112 may be disposed behind the buckle pad 514. In some embodiments, the buckle webbing 112 may be coupled to the buckle via a buckle opening 111 configured to receive the buckle webbing 112 therethrough (as shown in FIG. 8). According to one embodiment, the buckle webbing 112 may include a first end and a second end, wherein each of the first and second ends may be secured to the seat portion 104 of the child safety seat 100 via a respective buckle anchor 113 (as shown in FIG. 5C). In some embodiments, the first end and second end of the buckle webbing 112 may be secured to the seat portion 104 at a location disposed on either side of the buckle pad 514, as illustrated in FIG. 1B. Specifically, a portion of the buckle webbing 112 disposed near and coupled to the buckle 110 may be disposed in front of the buckle pad 514, while portions of the buckle webbing 112 disposed near the first and second ends of the buckle webbing 112 may be disposed to either side of the buckle pad 514. According to one embodiment, a buckle assembly 108 may include a first and second buckle webbing 112, wherein each of the buckle webbings includes a first end and a second end. As such, each of the first and second buckle webbing 112 may be coupled to the buckle 110 at a first end of the respective first and second buckle webbing 112 and may be secured to the seat portion 104 of the child safety seat 100 at the second end of the respective first and second buckle webbing 112. As such, the buckle pad 514 according to some embodiments may be configured to engage a first and second buckle webbing so as to bias a buckle assembly to a first position adjacent to the seat portion when the harness assembly 106 is in the disengaged state..

In some embodiments, the buckle pad head portion 504 may be generally aligned with the buckle 110, wherein the buckle pad head portion 504 is disposed between a child occupying the child safety seat and the buckle 110. The buckle pad head portion 502 may be configured to provide a child occupying the child safety seat 100 with cushioning from the buckle 110. For example, the buckle pad head portion 502 may be disposed between the buckle 110 and the child while the harness assembly is in the engaged state such that a cushioning material disposed within the head portion 502 cushions the child from the buckle 110.

In some embodiments, the buckle assembly 108 may include a biasing member 300, shown in FIG. 3, engaged with the buckle pad 514 and configured to bias the buckle assembly 108, in an instance in which the harness assembly 106 is in the disengaged state, toward a first position located away from the back portion 102 of the child safety seat 100. Specifically, the buckle assembly 108 may be configured to bias the buckle pad 514 to a first position adjacent the seat portion 104 and away from the location of a seated child and/or a back portion 102 of the child seat 100, in the direction A, when the harness assembly 106 is in the disengaged state, as shown in FIG. 5C. As such, the buckle assembly 108 may be biased away from the child towards a location between the child's legs and proximate to the seat portion 104 when the harness assembly 106 is in the disengaged state. In some embodiments, the first position may be located forward of a second position (shown in FIGS. 1A and 1B), wherein the second position is defined by the position of the buckle when the harness is in the engaged state (e.g., when the shoulder straps 120 are engaged with the buckle assembly 108). Additionally and/or alternatively, the second position may be defined as a position adjacent to the position of a child occupying the seat, such as when the harness assembly 106 is in the engaged state.

According to one embodiment, the buckle pad 514 may include a tail portion 504 configured to receive at least a portion of a biasing member 300 therein. The buckle pad 514 may, for example, include a biasing member pocket 508 that is disposed within the interior of buckle pad 514. In some embodiments, the biasing member pocket 508, depicted via dashed lines in FIG. 5A, may be accessible from the front of the buckle pad 514 via a biasing member pocket opening 506. As shown in FIG. 5A, the biasing member pocket 508 may extend from the bottom of the buckle pad tail portion 504 and into the buckle pad head portion 502. In some embodiments, the biasing member pocket 508 may extend from the bottom of the buckle pad tail portion 504 toward the bottom of the buckle webbing opening 516 disposed within the buckle pad head portion 502, as shown in FIG. 5A.

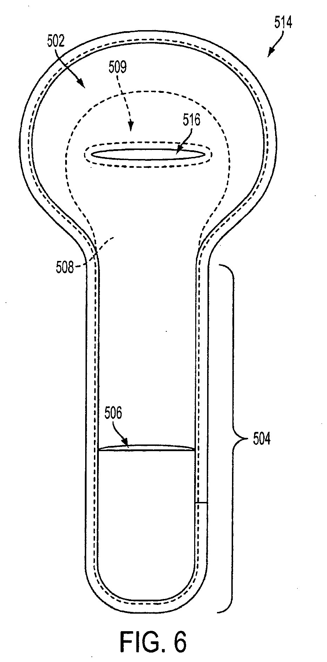

In another embodiment, as shown in FIG. 6, the biasing member pocket 508 may extend from the bottom of the buckle pad tail portion 504 to above the buckle webbing opening 516 disposed within the buckle pad head portion 502. In such an embodiment, the biasing member pocket 508 may substantially surround and be partially defined by the buckle webbing opening 516. For example, the biasing member pocket 508 may further include an upper portion 509 above the buckle webbing opening 516. The biasing member 300 may be disposed within the biasing member pocket 508 and the upper portion 509 such that the biasing member 300 is disposed above and below the buckle webbing opening 516, such as in embodiments in which the biasing member is configured in a loop, as shown in FIG. 3.

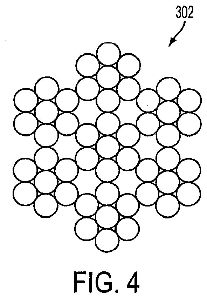

As noted above, the buckle assembly 108 may comprise a biasing member 300, as shown in FIG. 3. According to some embodiments, the biasing member 300 may be formed by taking a fixed length of material, such as a metal, plastic, composite plastic, elastic, fibrous, or any other resilient material that has a tendency to return to its original shape or position, and coupling one end of the material to an opposite end of the material, thereby forming a closed loop. For example, the biasing member 300 may include a length of material 302 having a 7x7 stainless steel braided core construction, as shown in FIG. 4. In some embodiments, the braided strands of material 302 may comprise stainless steel having an SAE grade of 304. Further, the material 302 may have a length of approximately between 40,64 cm and 50,8 cm, such as approximately 45,72 cm. Additionally and/or alternatively, the braided material 302 may have a maximum diameter of approximately between 0,178 cm 0,28 cm, such as approximately 0,229 cm.

As previously mentioned, the biasing member 300 may be formed by taking a fixed length of material 302 and coupling one end of the material to an opposite end of the material with a coupling element 304 to form the loop, as illustrated in FIG. 3. In some embodiments, the coupling element 304 may be configured to couple opposing ends of the braided strands of material 302 to each other. According to some embodiments, the coupling element 304 may comprise stainless steel, aluminum, or any other material suited to form a coupling element to couple one end of the length of material 302 to the opposite end of the length of material 302, such as via a threaded connection, clips, and/or other mechanical connection. Alternatively, the ends of the material 302 may be welded, adhered, or otherwise held together without a coupling element 304.

In some embodiments, the biasing member 300 may be configured to be inserted into the biasing member pocket 208 of the buckle pad 114 via the biasing member pocket opening 206 (FIG. 2A). For example, the biasing member 300 may be configured to be inserted into the biasing member pocket 208 of the buckle pad 114 in a coupled state. Further, the biasing member 300 may be configured to extend along an interior perimeter of the biasing member pocket 208 when the pre-coupled biasing member 300 is inserted therein. For example, the perimeter of the biasing member pocket 208 may be substantially similar to the length of the closed loop of the biasing member 300, and the biasing member 300 may be made of a material that, when formed into the loop, is configured to exert an outward force (e.g., away from a center of the loop) such that the biasing member maintains its shape and/or has a tendency to assume the shape of the biasing member pocket 208 in which it is held.

According to some embodiments in which the buckle pad 514 includes a buckle webbing opening 516, the biasing member 300 may be configured to be inserted into the biasing member pocket 508 and an upper portion 509 of the biasing member pocket 508 of a buckle pad 114 via the biasing member pocket opening 506, as shown in FIG. 6. For example, the length of material 302 of the biasing member 300 may be configured to first be positioned within the biasing member pocket 508 and the upper portion 509 in an uncoupled state. Once the length of material 302 occupies the upper portion 509, a first end and an opposite end of the length of material 302 may be coupled together to form the closed loop. Specifically, one end of the length of material 302 may be inserted into the biasing member pocket opening and guided towards the buckle pad head portion 502. The length of material 302 may be guided upwards towards the buckle webbing opening 516 and may be guided into the upper portion 509 from one side of the buckle webbing opening and may be guided from the upper portion 509 back down the biasing member pocket 508 (e.g., into the buckle pad tail portion 504) from the other side of the buckle webbing opening. Once the biasing member 300 has been guided through the upper portion 509 and is positioned within the upper portion 509 and the biasing member pocket 508, a first end of the biasing member may be coupled to the opposite end of the biasing member 300 with a coupling element 304 (e.g., via the biasing member opening pocket 506) so as to form the closed loop of material.

Regardless of the configuration of the buckle pad 114, 514, according to one embodiment, the coupling element 304 may be cylindrical in shape and may be configured to receive each of the opposing ends of the length of braided material 302 therein. The coupling element 304 may have a length of approximately between 1,52 cm and 2,54 cm, such as approximately 2,03 cm and a maximum outer diameter of approximately between 0,381 and 0,483 cm such as approximately 0,432 cm. Additionally and/or alternatively, the coupling element 304 may be configured to be deformed by an external force so as to create a butt end joint with the braided material 302. For example, the coupling element 304 may be crimped, adhered, welded, or otherwise fixed to the ends of the material 302 to form a closed loop biasing member 300.

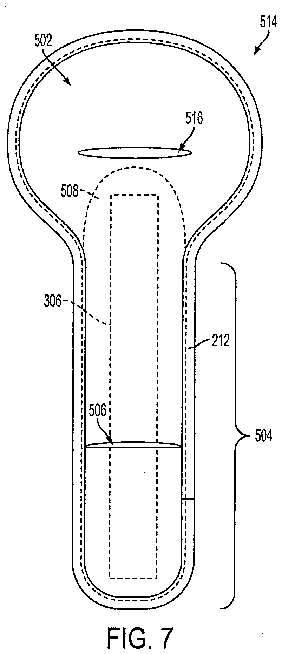

According to some embodiments, the biasing member 300 may be shaped as a solid tongue strip 306, depicted via the dashed lines in FIG. 7. As such, the biasing member 300 may be inserted within the biasing member pocket 208, 508 via the biasing member pocket opening 206, 506, as shown in FIGS. 2A and 5A respectively. The biasing member 300, such as the solid tongue strip 306, may be configured to bias the buckle pad 114, 514, when inserted therein, to fold away from the location of a seated child and/or a back portion of the child seat, in the direction A, when the harness assembly 106 is in the disengaged state, as shown in FIGS. 2C, 5C.

The particular configuration of the biasing member 300 may vary, however, depending on the amount of biasing force needed to overcome the force of gravity to move the buckle assembly 108 toward a first position away from an occupant of the child safety seat 100 in the disengaged state. For example, the amount of biasing force may depend, at least in part, on the angle at which the seat portion 104 is joined to the back portion 102 of the child safety seat 100 and the resulting angle of the seat portion with respect to the horizontal plane. In an infant carrier, for example, the angle between the seat portion 104 and the horizontal plane may be around 45°, whereas in a seat for an older child (e.g., a convertible car seat), the angle between the seat portion 104 and the horizontal plane may be only about 10°-15°.

### EXAMPLE

The following example has been included to provide guidance to one of ordinary skill in the art for practicing representative embodiments of the presently disclosed subject matter. In light of the present disclosure and the general level of skill in the art, those of skill can appreciated that the following example is intended to be exemplary only and that numerous changes, modifications, and alterations can be employed without departing from the scope of the presently disclosed subject matter.

According to example, the buckle assembly may include a buckle pad, a buckle, and a biasing member. In one embodiment, the buckle pad may include a wadding to provide a cushioned layer between a child occupant and the buckle. Additionally and/or alternatively, the wadding may be placed within the interior of a fabric defining the surface of the buckle pad. In some embodiments, the wadding may have an areal density of approximately 260 grams per square meter. The wadding may define a width of approximately 32 mm.

In some embodiments, the buckle pad may include a buckle pad tail portion and a buckle pad head portion. According to some embodiments, the buckle pad may be approximately 29,2 cm in length. The buckle pad head portion may be approximately 10,8 cm in length, and the buckle pad tail portion may be approximately 18,4 cm in length. Further, the buckle pad tail portion may be approximately 6,05 cm in width. According to some embodiments, the buckle pad head portion may be substantially circular in shape and may have a diameter of approximately 10,8 cm in length. In other embodiments, the buckle pad head portion may be elliptical in shape and have a minor axis of approximately 10,8 cm and a major axis of approximately 12,7 cm.

Additionally and/or alternatively, the buckle pad may include a biasing member pocket that extends from a distal end of the buckle pad tail portion into the buckle pad head portion. According to some embodiments, the biasing member pocket may be configured to receive a biasing member therein, wherein the biasing member comprises a closed loop of material, such as a braided steel rope. In some embodiments, the biasing member pocket may have a width of approximately 5,08 cm and a length of approximately 21,7 cm.

According to some embodiments, the buckle pad 114 and the biasing member 300 may be configured to be placed between a seat portion 104 of the child safety seat 100 and a seat cover 140. Additionally and/or alternatively, a buckle anchor may be configured to be coupled to the child safety seat 100. For example, a buckle anchor 113 (shown in FIG. 2C) may be attached to an end of the buckle webbing 112 opposite from the end of the buckle webbing 112 attached to the buckle 110, such that the buckle anchor may be coupled to the seat portion of the child safety seat so as to attach the buckle assembly 108 to the child safety seat 100. As such, the buckle webbing 112 may be configured to secure the buckle assembly 108 to the child safety seat 100. In some embodiments, when viewed from the front of the child safety seat 100, the buckle pad 114 may be disposed behind the buckle webbing 112, buckle 110, and/or buckle anchor 113 (shown in FIG. 2C), so as to be located between an occupant of the seat and the buckle and buckle webbing. In some embodiments, the buckle pad 114 may have a greater length than the combination of the buckle 110 and buckle webbing 112, such that when the buckle anchor 113 is coupled to the child safety seat 100, a portion of the buckle pad tail portion 204 may extend from the position where the buckle anchor is coupled to the seat portion 104 of the child safety seat 100 towards the back portion 102 of the child safety seat 100. Additionally and/or alternatively, a portion of the buckle pad 114 (e.g., an end of the tail portion 204) may be disposed between the seat portion 104 of the child safety seat 100 and the child safety seat cover 140 (e.g., under the seat cover), as illustrated in FIG. 2C. As such, the biasing member 300 may be configured to provide a biasing force to the buckle assembly 108 to position the buckle assembly forwardly toward a first position located away from the back portion 102 and towards the seat portion 104 when the harness assembly 106 is in a disengaged state, as shown in FIG. 2C. In some embodiments, the biasing member 300 may be configured to provide a biasing force to the buckle assembly 108 such that the buckle assembly 108 is biased toward the first position located away from an occupant when the harness assembly 106 is in a disengaged state.

Many modifications and other embodiments of the inventions set forth herein will come to mind to one skilled in the art to which these inventions pertain having the benefit of the teachings presented in the foregoing descriptions and the associated drawings. For example, although the embodiments depicted in the figures and described above include a buckle pad that is separate and distinct from the child safety seat cover, in some cases, the buckle pad may be connected to or at least partially integrated with the seat cover, such that the buckle pad is not removable from the seat cover. Moreover, in such embodiments, only the biasing member and the buckle webbing may extend under the seat cover, with the buckle pad disposed entirely above the seat cover. Therefore, it is to be understood that the inventions are not to be limited to the specific embodiments disclosed. Although specific terms are employed herein, they are used in a generic and descriptive sense only and not for purposes of limitation.

## Claims

1. A harness assembly (106) configurable between an engaged state and a disengaged state for a child safety seat (100) comprising:
a plurality of shoulder straps (120), each shoulder strap (120) including a buckle tab (130); and
at least one buckle assembly (108) comprising:
a buckle (110) configured to receive the buckle tabs (130) for securing the shoulder straps (120) in the engaged state;
a buckle pad (114), at least a portion of the buckle pad (114) being generally aligned with and adjacent to the buckle (110);
a buckle webbing (112) extending from the buckle (110) and configured to attach the buckle (110) to the child safety seat (100); and
a biasing member (300) engaged with the buckle pad (114) and configured to bias the buckle assembly (108) toward a first position away from an occupant of the child safety seat (100) in the disengaged state, **characterized in that** the biasing member (300) comprises a closed loop of material (302).

2. The harness assembly (106) of Claim 1, wherein the closed loop of material (302) comprises a metal material.

3. The harness assembly (106) of Claim 1, wherein the closed loop of material (302) comprises a braided material.

4. The harness assembly (106) of Claim 1, wherein the buckle pad (114) includes a buckle pad tail portion (204) configured to receive at least a portion of the biasing member (300) and a buckle pad head portion (202) generally aligned with the buckle (110), wherein the buckle pad (114) is disposed between an occupant and the buckle (110) and is configured to provide the occupant with cushioning from the buckle (110).

5. The harness assembly (106) of Claim 4, wherein the buckle pad (114) further comprises a biasing member pocket (208) configured to receive the biasing member (300) therein, wherein the biasing member pocket (208) extends from one end located in the buckle pad tail portion (204) to another end located in the buckle pad head portion (202).

6. The harness assembly (106) of Claim 1, wherein the buckle pad (114) includes a buckle webbing opening (516) configured to receive the buckle webbing (112) therethrough such that when a biasing force is applied to the buckle pad (114) by the biasing member (300), the biasing force is also applied to the buckle webbing (112).

7. The harness assembly (106) of Claim 6, wherein the buckle assembly (108) is further configured such that a portion of the buckle webbing (112) is disposed in front of the buckle pad (114) and a portion of the buckle webbing (112) is disposed behind the buckle pad (114).

8. The harness assembly (106) of Claim 1, wherein the buckle webbing (112) is configured to secure the buckle assembly (108) to the child safety seat (100).

9. The harness assembly (106) of Claim 1, wherein the child safety seat (100) comprises a back portion (102) and a seat portion (104), and wherein the biasing member (300) is configured to move the buckle assembly (108) to a position adjacent the seat portion (104) and away from the back portion (102) in the first position.

10. The harness assembly (106) of Claim 1, wherein the first position is located forward of a second position, wherein the second position is defined by the position of the buckle (110) when the harness assembly (106) is in the engaged state.

11. A child safety seat (100) configurable to be attached to a vehicle seat, the child safety seat (100) comprising:
a seat portion (104) configured to receive a child thereon;
a back portion (102) extending upwardly from an edge of the seat portion (104);
a seat cover (140) configured to cover the seat portion (104) and the back
portion (102); and
a harness assembly (106) according to any one of the preceding claims.

12. The child safety seat (100) of Claim 11, further comprising a buckle anchor (113), the buckle anchor (113) being coupled to an end of the buckle webbing (112) opposite of the buckle (110) and configured to attach the buckle assembly (108) to the seat portion (104).

## Patentansprüche

1. Gurtanordnung (106) für einen Kindersitz (100), die zwischen einem Eingriffszustand und einem gelösten Zustand konfigurierbar ist, und aufweist:
eine Vielzahl von Schultergurten (120), wobei jeder Schultergurt (120) ein Gurtschloss-Tab (130) aufweist; und
wenigstens eine Gurtschloss-Anordnung (108), die aufweist:
ein Gurtschloss (110), das dazu konfiguriert ist, die Gurtschloss-Tabs (130) zum Sichern der Schultergurte (120) im Eingriffszustand aufzunehmen;
ein Gurtschloss-Polster (114), wobei wenigstens ein Abschnitt des Gurtschloss-Polsters (114) im Allgemeinen mit dem Gurtschloss (110) ausgerichtet und dazu benachbart ist;
ein Gurtschloss-Gewebe (112), das sich von dem Gurtschloss (110) erstreckt und dazu konfiguriert ist, das Gurtschloss (110) an dem Kindersitz (100) zu befestigen; und
ein Vorspannteil (330), das mit dem Gurtschloss-Polster (114) in Eingriff und dazu konfiguriert ist, die Gurtschloss-Anordnung (108) im gelösten Zustand in Richtung einer ersten Position von einem Insassen des Kindersitzes (100) weg vorzuspannen,
**dadurch gekennzeichnet, dass**
das Vorspannteil (300) eine geschlossene Materialschleife (302) aufweist.

2. Gurtanordnung (106) nach Anspruch 1, wobei die geschlossene Materialschleife (302) ein Metallmaterial aufweist.

3. Gurtanordnung (106) nach Anspruch 1, wobei die geschlossene Materialschleife (302) ein Flechtmaterial aufweist.

4. Gurtanordnung (106) nach Anspruch 1, wobei das Gurtschloss-Polster (114) einen Gurtschloss-Polster-Hinterabschnitt (204) aufweist, der dazu konfiguriert ist, wenigstens einen Abschnitt des Vorspannteils (300) aufzunehmen, und einen Gurtschloss-Polster-Vorderabschnitt (202), der im Allgemeinen mit dem Gurtschloss (110) ausgerichtet ist, wobei das Gurtschloss-Polster (114) zwischen einem Insassen und dem Gurtschloss (110) angeordnet und dazu konfiguriert ist, den Insassen mit einer Polsterung gegenüber dem Gurtschloss (110) zu versehen.

5. Gurtanordnung (106) nach Anspruch 4, wobei das Gurtschloss-Polster (114) des Weiteren eine Vorspannteil-Tasche (208) aufweist, die dazu konfiguriert ist, das Vorspannteil (300) darin aufzunehmen, wobei sich die Vorspannteil-Tasche (208) von einem Ende, das sich in dem Gurtschloss-Polster-Hinterabschnitt (204) befindet, zu einem anderen Ende, das sich in dem Gurtschloss-Polster-Vorderabschnitt (202) befindet, erstreckt.

6. Gurtanordnung (106) nach Anspruch 1, wobei das Gurtschloss-Polster (114) eine Gurtschloss-Gewebe-Öffnung (516) aufweist, die dazu konfiguriert ist, das Gurtschloss-Gewebe (112) dort hindurch aufzunehmen, so dass, wenn von dem Vorspannteil (300) eine Vorspannkraft auf das Gurtschloss-Polster (114) ausgeübt wird, die Vorspannkraft auch auf das Gurtschloss-Gewebe (112) ausgeübt wird.

7. Gurtanordnung (106) nach Anspruch 6, wobei die Gurtschloss-Anordnung (108) des Weiteren so konfiguriert ist, dass ein Abschnitt des Gurtschloss-Gewebes (112) vor dem Gurtschloss-Polster (114) angeordnet ist, und ein Abschnitt des Gurtschloss-Gewebes (112) hinter dem Gurtschloss-Polster (114) angeordnet ist.

8. Gurtanordnung (106) nach Anspruch 1, wobei das Gurtschloss-Gewebe (112) dazu konfiguriert ist, die Gurtschloss-Anordnung (108) an dem Kindersitz (110) zu sichern.

9. Gurtanordnung (106) nach Anspruch 1, wobei der Kindersitz (100) einen Rückenlehnenabschnitt (102) und einen Sitzabschnitt (104) aufweist, und wobei das Vorspannteil (300) dazu konfiguriert ist, die Gurtschloss-Anordnung (108) in der ersten Position in eine Position nahe des Sitzabschnitts (104) und von dem Rückenlehnenabschnitt (102) weg zu bewegen.

10. Gurtanordnung (106) nach Anspruch 1, wobei sich die erste Position vor einer zweiten Position befindet, wobei die zweite Position durch die Position des Gurtschlosses (110) definiert wird, wenn sich die Gurtanordnung (106) im Eingriffszustand befindet.

11. Kindersitz (110), der dazu konfigurierbar ist, an einem Fahrzeugsitz befestigt zu werden, wobei der Kindersitz (100) aufweist:
einen Sitzabschnitt (104), der dazu konfiguriert ist, ein Kind darauf aufzunehmen;
einen Rückenlehnenabschnitt (104), der sich von einer Kante des Sitzabschnitts (104) nach oben erstreckt;
eine Sitzabdeckung (140), die dazu konfiguriert ist, den Sitzabschnitt (104) und den Rückenlehnenabschnitt (102) zu bedecken; und
eine Gurtanordnung (106) nach einem der vorhergehenden Ansprüche.

12. Kindersitz (100) nach Anspruch 11, der des Weiteren einen Gurtschloss-Anker (113) aufweist, wobei der Gurtschloss-Anker (113) mit einem Ende des Gurtschloss-Gewebes (112), das dem Gurtschloss (110) gegenüberliegt, verbunden und dazu konfiguriert ist, die Gurtschloss-Anordnung (108) an dem Sitzabschnitt (104) zu befestigen.

## Revendications

1. Ensemble harnais (106) configurable entre un état enclenché et un état libéré pour un siège de sécurité pour enfant (100) comprenant :
une pluralité de bretelles (120), chaque bretelle (120) comprenant une languette à boucle (130) ; et
au moins un ensemble boucle (108) comprenant :
une boucle (110) conçue pour recevoir les languettes à boucle (130) pour fixer les bretelles (120) dans l'état enclenché ;
un coussinet de boucle (114), au moins une partie du coussinet de boucle (114) étant généralement alignée avec et adjacente à la boucle (110) ;
une sangle de boucle (112) s'étendant depuis la boucle (110) et conçue pour attacher la boucle (110) au siège de sécurité pour enfant (100) ; et
un élément de sollicitation (300) en prise avec le coussinet de boucle (114) et conçu pour solliciter l'ensemble boucle (108) vers une première position éloignée d'un occupant du siège de sécurité pour enfant (100) dans l'état libéré, **caractérisé en ce que** l'élément de sollicitation (300) comprend une boucle fermée de matériau (302).

2. Ensemble harnais (106) selon la revendication 1, dans lequel la boucle fermée de matériau (302) comprend un matériau métallique.

3. Ensemble harnais (106) selon la revendication 1, dans lequel la boucle fermée de matériau (302) comprend un matériau tressé.

4. Ensemble harnais (106) selon la revendication 1, dans lequel le coussinet de boucle (114) comprend une partie queue de coussinet de boucle (204) conçue pour recevoir au moins une partie de l'élément de sollicitation (300) et une partie tête de coussinet de boucle (202) généralement alignée avec la boucle (110), dans lequel le coussinet de boucle (114) est disposé entre un occupant et la boucle (110) et est conçu pour fournir à l'occupant un amortissement de la boucle (110).

5. Ensemble harnais (106) selon la revendication 4, dans lequel le coussinet de boucle (114) comprend en outre une poche d'élément de sollicitation (208) conçue pour recevoir l'élément de sollicitation (300) à l'intérieur, dans lequel la poche d'élément de sollicitation (208) s'étend d'un extrémité située dans la partie queue de coussinet de boucle (204) à une autre extrémité située dans la partie tête de coussinet de boucle (202).

6. Ensemble harnais (106) selon la revendication 1, dans lequel le coussinet de boucle (114) comprend une ouverture de sangle de boucle (516) conçue pour recevoir la sangle de boucle (112) à travers cette dernière de sorte que lorsqu'une force de sollicitation est appliquée au coussinet de boucle (114) par l'élément de sollicitation (300), la force de sollicitation est également appliquée à la sangle de boucle (112).

7. Ensemble harnais (106) selon la revendication 6, dans lequel l'ensemble boucle (108) est en outre conçu de telle sorte qu'une partie de la sangle de boucle (112) est disposée devant le coussinet de boucle (114) et une partie de la sangle de boucle (112) est disposée derrière le coussinet de boucle (114).

8. Ensemble harnais (106) selon la revendication 1, dans lequel la sangle de boucle (112) est conçue pour fixer l'ensemble boucle (108) au siège de sécurité pour enfant (100).

9. Ensemble harnais (106) selon la revendication 1, dans lequel le siège de sécurité pour enfant (100) comprend une partie dossier (102) et une partie siège (104), et dans lequel l'élément de sollicitation (300) est conçu pour déplacer l'ensemble boucle (108) vers une position adjacente à la partie siège (104) et éloignée de la partie dossier (102) dans la première position.

10. Ensemble harnais (106) selon la revendication 1, dans lequel la première position est située en avant d'une seconde position, dans lequel la seconde position est définie par la position de la boucle (110) lorsque l'ensemble harnais (106) se trouve dans l'état enclenché.

11. Siège de sécurité pour enfant (100) configurable pour être attaché à un siège de véhicule, le siège de sécurité pour enfant (100) comprenant :
une partie siège (104) conçue pour recevoir un enfant dessus ;
une partie dossier (102) s'étendant vers le haut depuis un bord de la partie siège (104) ;
une housse de siège (140) conçue pour recouvrir la partie siège (104) et la partie dossier (102) ; et
un ensemble harnais (106) selon l'une quelconque des revendications précédentes.

12. Siège de sécurité pour enfant (100) selon la revendication 11, comprenant en outre un ancrage à boucle (113)1, l'ancrage à boucle (113) étant accouplé à une extrémité de la sangle de boucle (112) à l'opposé de la boucle (110) et conçu pour attacher l'ensemble boucle (108) à la partie siège (104).
